# DEMANDE DE BREVET EUROPEEN

(11) **EP 3 467 739 A1**
(43) Date de publication de la demande: **10.04.2019**
(21) Numéro de dépôt: 18198635.7
(22) Date de dépôt: 04.10.2018
(51) Int. Cl.: G06Q 10/08

(54) **CABINE INTERACTIVE, PROCÉDÉ ASSOCIÉ**

(30) Priorité: 06.10.2017 FR 1759372
(71) Demandeur: Helpline, 92000 Nanterre (FR)
(72) Inventeur: LEHMANN, Jérôme, 92500 Rueil Malmaison (FR); MINCHELLA, Remy, 95880 ENGHIEN LES BAINS (FR); ROZET, Olivier, 92330 SCEAUX (FR)
(74) Mandataire: Roman, Alexis

(57) **Abrégé**

Cabine interactive (1) comportant :
▪ un moyen d'accès électronique externe (7) agencé à l'extérieur de la cabine interactive (1) verrouillable/dé-verrouillable à partir d'une première commande distante (Cmd₁) ;
▪ Un ensemble (5) de casiers sécurisés (501, 502, ..., 525) agencé à l'intérieur de la cabine interactive (1) verrouillable/dé-verrouillable à partir d'une seconde commande distante (Cmd₂) ;
▪ Un premier lien réseau (L₁) pour l'établissement d'un lien à distance avec le moyen d'accès électronique externe (7) ;
▪ Un second lien réseau (L₂) pour l'établissement d'un lien à distance avec un premier commutateur (SW₁) agencé dans la cabine interactive (1), ledit premier commutateur (SW₁) étant connecté à une pluralité d'équipements électroniques, chaque équipement électronique étant agencé dans un casier de l'ensemble de casiers ;
▪ Un capteur optique (8) pour lire et transmettre à distance à partir du premier lien réseau (L₁) un identifiant codé sur un marquage d'un équipement électronique.

## Description

### DOMAINE

Le domaine de l'invention concerne les cabines interactives assurant des fonctions de support technique, de diffusion de contenu interactifs multimédia et support logistique notamment pour des employés ou clients d'une entreprise ou par exemple un centre de formation.

### ETAT DE L'ART

Il existe des cabines interactives dans différents domaines et répondant à différentes applications.

Par exemple, dans le domaine des espaces de travail modulaires, des cabines closes de travail sont conçues pour former des espaces de travail facilement montables et démontables dans lesquels des services sont intégrés tels qu'une connexion à un réseau de données et/ ou l'accès à des informations. Dans ce type de cabine, des luminaires, des rangements ou encore des écrans sont intégrés afin de définir un espace de travail convivial.

Dans le domaine de la formation, il existe des cabines permettant, par exemple, de définir un périmètre fonctionnel pour un utilisateur disposant d'outils. Ces cabines permettent notamment d'insonoriser l'espace de formation ou de préserver l'espace environnant dans lequel d'autres personnes se situent. Elles sont conçues pour mettre à disposition des outils spécifiques à une personne pendant un temps donné.

Dans le domaine de la formation et des jeux, il existe des cabines interactives comportant des moyens multimédias tels qu'un écran, une caméra et des joysticks pour immerger une ou des personnes dans un univers interactifs.

Aujourd'hui, il existe un besoin de définir un espace clos interactif multifonctionnel qui puisse être installé dans un espace dans lequel une communauté de gens travaille, telle qu'une entreprise et permettant à un individu donné d'accéder à des services de maintenance informatique et transverse à l'entreprise (RH, SG, Métiers ...), à des formations spécifiques ou d'obtenir du matériel dédié. Un besoin est de définir un espace qui permettent d'accéder à des services personnalisés dans lequel des spécificités de l'individu sont prises en compte.

### RESUME DE L'INVENTION

L'invention vise à pallier les inconvénients précités.

Selon un premier aspect l'invention concerne une cabine interactive comportant :
▪ un moyen d'accès électronique externe agencé à l'extérieur de la cabine interactive pour générer une requête de déverrouillage d'un accès à l'intérieur de la cabine ;
▪ un accès sécurisé piloté par un verrou électronique déverrouillant l'accès à la cabine partir d'une première commande numérique ;
▪ Un ensemble de casiers sécurisés agencé à l'intérieur de la cabine interactive verrouillable/dé-verrouillable à partir d'une seconde commande numérique distante ;
▪ Un premier lien réseau pour l'établissement d'au moins une liaison de données à distance avec le moyen d'accès électronique externe ;
▪ Un second lien réseau pour l'établissement d'un lien à distance avec un premier commutateur agencé dans la cabine interactive, ledit premier commutateur étant connecté à une pluralité d'équipements électroniques, chaque équipement électronique étant agencé dans un casier de l'ensemble de casiers ;
▪ Un capteur optique pour lire et transmettre à distance à partir du premier lien réseau un identifiant codé sur un marquage d'un équipement électronique.

Un avantage est de permettre de délivrer un matériel à un utilisateur à distance tout en offrant un suivi centralisé d'un parc d'équipements. L'invention permet d'offrir un lieu sécurisé permettant notamment le retrait d'un équipement et une assistance technique à distance.

Selon un mode de réalisation, le moyen d'accès électronique externe comporte une interface optique et/ou une interface tactile permettant de transmettre une requête de déverrouillage de la cabine.

Un avantage est de sécuriser la cabine afin qu'elle puisse être installée dans des lieux de passage.

Selon un mode de réalisation, au moins un casier comporte :
▪ une première connectique réseau assurant la transmission de messages du protocole Wake-on-LAN pour démarrer les équipements électroniques et configurer ces derniers à distance et ;
▪ une seconde connectique d'alimentation pour connecter un équipement électronique contenu dans le casier à une source d'alimentation.

Un avantage est de délivrer des équipements prêts à l'emploi et préconfiguré. La dernière étape de configuration de l'équipement est alors réalisée avec l'utilisateur et peut ainsi être plus rapide. En outre, une étape de personnalisation de l'équipement peut donc être finalisée avec l'utilisateur.

Selon un mode de réalisation, la pluralité de casiers est agencée sur la face arrière intérieure de la cabine.

Un avantage est d'adressé un service à une pluralité d'utilisateur en minimisant la maintenance et le support sur place. La cabine de l'invention peut être préparée avec plusieurs dizaines d'équipements. Les mises à jour sont faites à distance. Elle peut donc être utilisée sur de longues périodes sans nécessité la venue d'un technicien.

Selon un mode de réalisation, la cabine interactive comporte une interface électronique interne munie d'un afficheur agencé à l'intérieur de la cabine interactive, la cabine interactive comportant en outre un second commutateur connecté au moyen d'accès électronique externe et à l'interface électronique interne.

Un avantage est de permettre une interaction avec un opérateur distant notamment pour assister un utilisateur dans les dernières étapes de configurations de son matériel ou lorsque ce dernier vient avec un matériel par exemple défectueux.

Selon un mode de réalisation, le capteur optique est raccordé à un réseau de données par l'intermédiaire :
▪ de l'interface électronique interne, ou ;
▪ du second commutateur.

Selon un mode de réalisation, la cabine interactive comporte :
▪ Une première caméra fixée sur la façade avant intérieure de la cabine interactive afin d'établir une connexion multimédia entre un opérateur distant et un utilisateur à l'intérieur de la cabine interactive et/ ou ;
▪ Une seconde caméra fixée au plafond de la cabine interactive afin d'établir un contrôle visuel à distance des opérations réalisées par l'utilisateur.

Un avantage est d'établir un connexion multimédia rendant l'assistance plus conviviale. En outre, elle permet une véritable assistance technique lorsque la caméra agencée au plafond est utilisée pour guider l'utilisateur ou pour constater d'un problème.

Selon un mode de réalisation, la cabine interactive comporte une imprimante à badge pilotable à distance, l'imprimante imprimant, à réception d'une commande numérique, une carte imprimée comportant une mémoire configurée lors de l'impression pour stocker un identifiant utilisateur prédéfini.

Un avantage est de délivrer un moyen d'accès physique, tel qu'un badge, à un utilisateur à l'issue de son passage dans la cabine.

Selon un mode de réalisation, les badges configurables sont des badges :
▪ à technologie sans fil, tel qu'une technologie supportant le protocole NFC ou RFID, ou ;
▪ à technologie de contact, tel qu'un badge comportant une piste magnétique ou une puce électronique à contact.

Selon un autre aspect, l'invention concerne un procédé de déverrouillage d'un accès à un équipement électronique comportant les étapes suivantes :
▪ génération d'une requête de déverrouillage au moyen d'une interface externe fixée à une cabine sécurisée ;
▪ déverrouillage d'un accès à l'intérieur de la cabine interactive par la génération d'une première commande comportant une information apte à déverrouiller l'accès ;
▪ contrôle des droits utilisateurs du premier utilisateur et sélection d'un casier comportant un équipement électronique attribuable à un profil prédéfini dans une base de données ;
▪ ouverture du casier sélectionné à partir d'une seconde commande à distance ;
▪ identification d'un premier équipement électronique contenu dans le casier ouvert, ledit premier équipement électronique comportant un marquage unique, l'identification étant réalisée à partir d'une opération de lecture optique du marquage unique ;
▪ Une association à distance entre l'identifiant du premier utilisateur et l'identifiant de l'équipement électronique afin d'enregistrer dans une mémoire distante ladite association.

Un avantage est de permettre d'associer un équipement à un utilisateur afin de tenir à jour une gestion de parc de matériels de manière instantanée. En outre cette opération est réalisée sans déplacement de technicien et tout en sécurisant la transmission de l'équipement.

Selon un mode de réalisation, le procédé comporte une activation d'une liaison bidirectionnelle permettant d'établir un flux média de type vidéo afin :
- de générer une image d'un opérateur distant sur un afficheur agencé sur la partie frontale intérieure de la cabine interactive ;
- de transmettre une image du premier utilisateur à un opérateur distant à partir d'une caméra agencée dans la cabine.

Selon un mode de réalisation, l'activation de la liaison bidirectionnelle est réalisée automatiquement dès l'authentification du premier utilisateur effectuée ou dès l'ouverture de l'accès de la cabine interactive.

Un avantage est d'établir un lien contextuel immédiat permettant de rendre l'expérience plus conviviale dans la cabine. En outre, il permet d'établir un lien avec un opérateur donné en fonction d'un type de profil d'utilisateur authentifié.

Selon un mode de réalisation, le procédé comprend une étape de sélection d'une opération de restitution d'un second équipement électronique, ledit procédé comportant ;
▪ Une identification dudit second équipement par la lecture d'un marquage unique agencé sur l'équipement à partir d'un capteur optique,
▪ une transmission d'un identifiant du second équipement à un serveur distant à partir d'au moins une interface réseau présente dans la cabine interactive ;
▪ une validation dudit identifiant et une modification de l'état d'association entre l'identifiant du premier utilisateur et d'un identifiant du second équipement restitué ;
▪ une génération d'une commande d'ouverture d'un casier vide pour la restitution du second équipement à restituer ;
▪ Une génération d'une requête d'un nouvel équipement à partir d'une requête générée au moyen de l'interface électronique interne.

Un avantage est de permettre un gain de temps dans l'échange de matériel et une amélioration du suivi du parc d'équipements lorsque des changements interviennent notamment à distance. L'invention permet de centraliser la gestion d'un parc d'équipements de manière instantanée sur une pluralité de sites distants.

### BREVE DESCRIPTION DES FIGURES

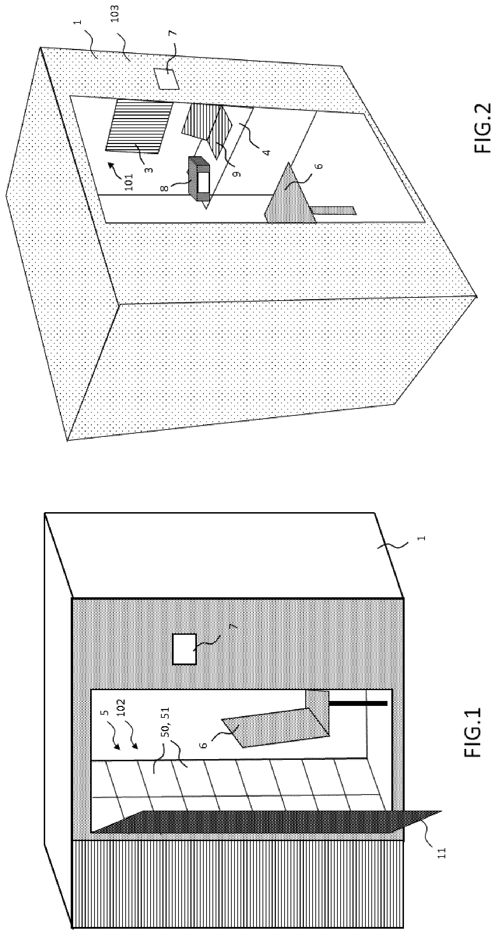

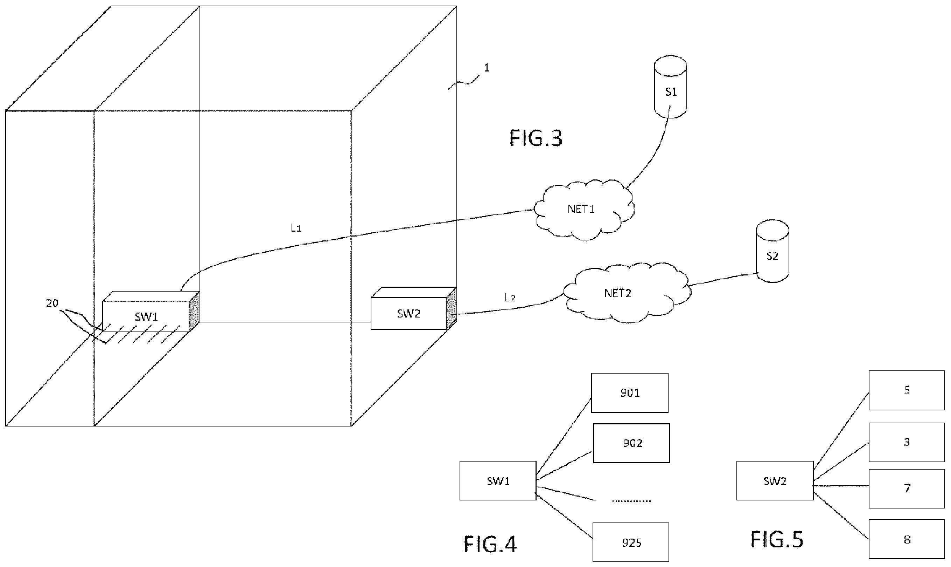

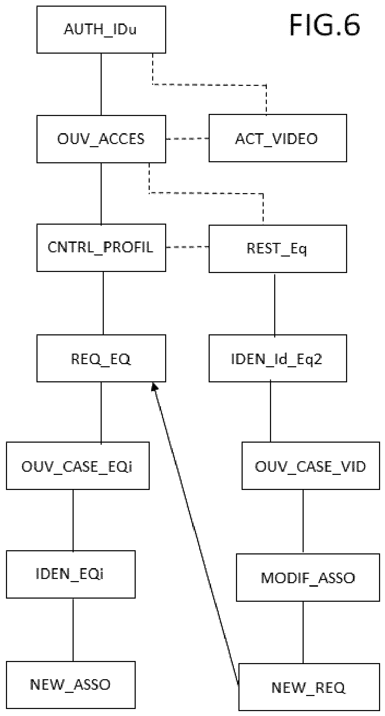

D'autres caractéristiques et avantages de l'invention ressortiront à la lecture de la description détaillée qui suit, en référence aux figures annexées, qui illustrent :
▪ figure 1 : une cabine interactive en perspective selon un exemple de réalisation de l'invention ;
▪ figure 2 : une cabine interactive selon un autre angle de perspective selon un exemple de réalisation de l'invention ;
▪ figure 3 : les liaisons réseaux d'une cabine interactive selon un exemple de réalisation de l'invention ;
▪ figures 4 et 5 : les liens des commutateurs d'une cabine interactive selon un exemple de réalisation de l'invention ;
▪ figure 6 : les principales étapes d'un mode de réalisation du procédé de l'invention.

### DESCRIPTION

Les différents éléments matériels de la cabine ci-après sont décrits selon différents modes de réalisation de la cabine de l'invention ou du procédé de remise d'un matériel de l'invention. Les différents modes de réalisation se combinent selon différentes variantes de mises en oeuvre.

### Cabine interactive - ergonomie générale

Selon un mode de réalisation, la cabine interactive 1 de l'invention est une cabine monoplace comportant une chaise 6 et au moins une planche 4 fixée horizontalement permettant de définir un plan de travail pour y disposer un matériel et de le connecter à un réseau de données et/ou de l'alimenter à une source de courant. Selon un exemple, la chaise peut être un tabouret pivotant et de hauteur réglable. La cabine 1 comporte un moyen d'accès électronique externe 7 permettant d'activer le déverrouillage d'un accès mobile 11 à la cabine 1, tel qu'une porte battante ou une vitre coulissante. Le système de verrouillage et le déverrouillage comprennent des composants électroniques activables à distance à partir du moyen d'accès électronique externe 7 qui est connecté à un réseau de données NET2.

Selon un mode de réalisation, la cabine interactive 1 est isolée acoustiquement par une paroi interne spécialement conçue pour absorber une partie des ondes acoustiques se propageant en son sein. A cette fin un mousse en polyuréthane alvéolée, un rideau phonique ou un rouleau isolant en aluminium peuvent être utilisé notamment dans certaines régions de la cabine 1. Selon un mode de réalisation, la cabine est également isolée thermiquement.

Les figures 1 et 2 représentent un exemple de réalisation illustrant certaines caractéristiques de la cabine interactive 1 de l'invention.

Dans sa partie frontale intérieure 101, la cabine 1 comporte des éléments d'interaction, tels que par exemple un écran, un clavier une caméra, un lecteur optique 8, des enceintes, etc. permettant à un utilisateur d'opérer un certain nombre d'actions seul ou avec un opérateur distant.

Dans sa partie arrière intérieure, la cabine 1 comporte un ensemble 5 de casiers 50, 51, etc. Selon un mode de réalisation, la cabine 1 comporte entre 10 et 48 casiers. Selon un mode de réalisation, un ensemble de casiers comporte un volume permettant de stocker un ordinateur portable. Selon un mode de réalisation, différents volumes de casiers sont disponibles afin de stocker des équipements électroniques ou non de différentes dimensions et de différents types. A titre d'exemple, le volume intérieur d'un casier peut être adapté à un ordinateur portable, une tablette numérique, un téléphone ou smartphone, un EPI, un outil métier, etc. Les équipements électroniques 90x stockés dans les différents casiers sont connectés à un premier commutateur SW₁ agencé dans la cabine 1, appelé également switch. Selon un mode de réalisation qui se combine avec les précédents modes, les équipements électroniques sont également alimentés électriquement afin d'être prêt à l'emploi lors de leur retrait.

La notation 90x est utilisée pour désigner l'un quelconque des équipements électroniques stocké dans un casier 50. La notation 9 est utilisée pour désigner un équipement électronique retiré d'un casier 50 par un utilisateur Ut₁.

Selon une variante de réalisation, une cabine 1 comporte deux chaises afin de proposer une assistance directe par une personne accompagnant un utilisateur Ut₁ souhaitant bénéficier des services proposés par la cabine interactive.

Un avantage d'une telle cabine 1 est de stocker des équipements électroniques ou autres outils qui peuvent être délivrés à un personnel par exemple d'une entreprise tout en sécurisant leur accès. Avantageusement, aucun déplacement de technicien n'est nécessaire. Le contenu de la cabine peut être mise à jour régulièrement afin de récupérer le matériel rendu et d'alimenter un nouveau parc de matériel. De ce fait, le matériel peut être mis à disposition sans contrainte horaire, puisque opéré à distance.

### Moyen d'accès électronique

Selon un mode de réalisation, la cabine 1 comporte, fixée sur sa partie extérieure, un moyen d'accès électronique externe 7 permettant d'offrir une interface utilisateur. Le moyen d'accès externe 7 peut être fixé sur la surface latérale extérieure 103 de la cabine 1 par un moyen de fixation tel qu'un système de vis-écrou. Alternativement, le moyen d'accès externe 7 peut être encastré dans une cavité dimensionnée spécialement pour l'accueillir. D'autres modes de réalisation sont envisageables dans la mise en oeuvre de la cabine 1 de l'invention.

Le moyen d'accès externe 7 est alimenté par une source d'alimentation et est raccordé à un réseau de données.

Selon un mode de réalisation, le moyen d'accès externe 7 comprend une tablette numérique tactile comportant une interface spécialement dédiée pour offrir une ergonomie d'accueil pour un utilisateur souhaitant consulter l'interface ou entrer dans la cabine 1.

Selon un mode de réalisation, le moyen d'accès externe 7 comporte un afficheur permettant de diffuser un contenu multimédia afin que des personnes passant à proximité découvrent par exemple les services proposés par la cabine 1.

Selon un mode de réalisation, le moyen d'accès externe 7 comporte une interface réseau filaire ou sans fil permettant de télécharger et de diffuser un contenu stocké dans une base média distante. Selon un autre exemple, un contenu multimédia stocké dans une mémoire locale du moyen d'accès externe 7 peut être utilisé pour être diffusé sur l'afficheur.

Selon un mode de réalisation, le moyen d'accès externe 7 comporte un lecteur électronique permettant d'identifier un utilisateur Ut₁ souhaitant entrer dans la cabine 1. Il peut être également raccordé par exemple par USB ou Bluetooth au moyen d'accès externe 7.

Selon une première variante de réalisation, le lecteur électronique peut comprendre une interface pour établir un contact avec une puce électronique de contact. Alternativement, il peut s'agir d'un lecteur magnétique pour lire une bande magnétique agencée sur un badge d'accès.

Selon une seconde variante de réalisation, le lecteur électronique peut comprendre une interface de communication sans fil pour établir un transfert de données sans fil par l'émission et la réception d'un message radio. Selon un mode de réalisation un lecteur RFID ou NFC peut être utilisé afin de lire un identifiant stocké sur un badge personnalisé porté par un utilisateur Ut₁. Un lecteur infrarouge peut être utilisé également.

Selon un mode de réalisation, l'utilisateur Ut₁ souhaitant entrer dans la cabine 1 approche un badge à proximité du lecteur afin d'être identifié.

Selon un mode de réalisation, un lecteur comportant un champ de lecture proche est utilisé afin d'éviter des erreurs de reconnaissances d'utilisateurs situés à proximité de la cabine 1.

Selon un mode de réalisation, le moyen d'accès externe 7 comporte une interface interactive tel qu'un bouton numérique ou mécanique permettant d'activer la lecture d'un badge. Ainsi, dans cette variante, la lecture est effectuée sur une demande utilisateur. Elle permet d'éviter les fausses détections.

Le moyen d'accès externe 7 comprend un calculateur pour décoder un message comportant un identifiant transmis par un contact électronique ou magnétique ou par une transmission sans fil.

L'identifiant Id_Ut₁ de l'utilisateur Ut₁ est transmis à partir de l'interface réseau du moyen d'accès externe 7 vers un serveur distant S2 à travers un réseau de données NET2. Selon les modes de réalisation envisagés, le moyen d'accès externe 7 est connecté à un second commutateur SW₂ ou un équipement assurant une fonction de commutation pour acheminer des messages vers une entité distante.

L'accès à l'intérieur de la cabine 1 peut donc être déverrouillé consécutivement à une authentification d'un utilisateur Ut₁ disposant d'un badge qu'il positionne au contact du lecteur ou qu'il introduit dans un lecteur ou qu'il rapproche suffisamment près du lecteur.

La validation automatique d'une identité connue et préenregistrée dans une base de données distante ou locale permet d'authentifier l'utilisateur Ut₁ et d'activer une première commande d'ouverture d'un accès à la cabine 1, tel qu'une porte sécurisée 11 comportant un verrou électronique pilotable à distance. Un tel verrou électronique peut comporter par exemple un loquet amovible ou une ventouse électrique pilotable à partir d'une consigne numérique. Il peut être alimenté par une source d'alimentation agencée à l'intérieur de la cabine 1.

Selon un exemple de réalisation, une liaison sans fil est établie entre le lecteur de carte et le verrou électronique agencée sur la porte ou le dormant. Selon un autre exemple de réalisation, le lecteur de carte est agencé directement sur le verrou électronique et est donc déporté du moyen d'accès externe 7.

Selon un exemple de réalisation, le contrôle de l'activation du verrou électronique est réalisé localement grâce à une mémoire locale comportant des données d'identification relative à un ensemble d'utilisateurs et un calculateur permettant de décoder une donnée d'identifiant utilisateur Id_Ut1 afin de générer une consigne d'ouverture. Dans ce cas la commande d'ouverture n'est pas une commande générée depuis un serveur distant, mais la génération d'une consigne de déverrouillage a pour effet d'émettre un message de donnes à un serveur distant signalant l'ouverture de l'accès à la cabine 1.

### ▪ Si l'utilisateur n'est pas connu

L'authentification peut être celle d'un utilisateur Ut₁ ou celle d'un accompagnateur d'un utilisateur Ut₁ n'ayant pas encore d'identifiant et/ou de profil utilisateur. Ce dernier cas se produit, par exemple, lorsqu'un nouvel utilisateur Ut₁ arrive dans une communauté, tel qu'un nouvel employé ou client d'une entreprise. Dans ce cas, et selon ce mode de réalisation, c'est bien l'identité d'une autre personne qui permet d'ouvrir la cabine 1, l'utilisateur Ut₁ pourra, par exemple, ensuite créer un nouveau profil à partir d'une interface électronique interne 3, et d'une commande à distance. Selon un autre mode de réalisation, la création d'un profil d'un utilisateur Ut₁ est réalisée par un opérateur à distance selon des procédures de contrôles et validation prédéfinies après l'établissement d'une connexion réseau entre la cabine et un ordinateur distant piloté par l'opérateur.

### ▪ Authentification sans badge

Selon un mode de réalisation, l'authentification d'un utilisateur est réalisée sans badge. Elle peut être réalisée à partir d'une sélection d'un onglet numérique de l'écran du moyen d'accès externe 7. Selon un exemple de réalisation, l'utilisateur Ut₁ entre un identifiant ou un nom à partir de l'interface du moyen d'accès externe 7 et valide l'émission d'une requête visant à demander un accès à l'intérieur de la cabine 1. La requête est transmise à un serveur distant pour validation. L'authentification est alors une authentification qui est complétée par un contrôle d'accès supplémentaire tel que la transmission d'une information supplémentaire, ou un contrôle visuel ou vocal lorsque le moyen d'accès externe 7 est muni d'une caméra ou d'un micro ou d'un clavier numérique pour entrer un code.

Selon un mode de réalisation, une demande d'accès peut être demandée à partir d'une commande simple visant à émettre une requête d'ouverture de l'accès à la cabine 1 sans donner d'indication sur l'identité de l'utilisateur Ut₁. Il peut s'agir d'un « bouton sonnette » générant une requête à un serveur distant, telle qu'un appel téléphonique utilisant le protocole IP.

Selon ce mode de réalisation, préférentiellement une demande d'accès a été précédée d'une demande de rendez-vous. L'authentification est alors réalisée par la corroboration :
▪ d'une demande d'accès anonyme directement auprès de la cabine et ;
▪ d'une information enregistrée correspondant à un rendez-vous planifié préalablement.

Cette dernière information enregistrée peut comprendre par exemple un horodatage, c'est-à-dire une date et le nom d'une personne déjà enregistré dans une mémoire distante.

La personne déjà enregistrée peut être, par exemple, un responsable de la venue du nouvel utilisateur Ut₁, ou une personne chargée de l'accueillir. Le rendez-vous a été planifié de sorte à enregistré dans une base distante une information permettant de s'assurer qu'un appel anonyme à une heure donnée est attendu.

Dans un cas d'exemple d'un nouvel employé d'une entreprise venant chercher un équipement électronique 9 pour la première fois, le responsable peut être son supérieur ou un responsable des ressources humaines. Le rendez-vous a alors été planifié à partir d'une plateforme numérique, telle qu'une plateforme WEB proposant la gestion d'un agenda électronique de la disponibilité de la cabine 1. Un intérêt est que l'utilisateur n'a pas besoin d'être accompagné pour accéder à l'intérieur de la cabine.

Selon un mode de réalisation, le profil utilisateur a été préalablement défini et enregistré dans une base distante, selon un autre mode de réalisation, l'utilisateur créera son profil utilisateur au sein de la cabine 1.

### Interface électronique interne

Selon un mode de réalisation, lorsqu'un utilisateur Ut₁ est entré dans la cabine 1, une interface électronique interne 3 comportant un afficheur pilotable à distance active un programme de bienvenue.

Selon un mode de réalisation, l'interface électronique interne 3 est connectée au second switch/commutateur SW₂. Le programme de bienvenue peut être lancé automatiquement dès lors que l'authentification est réalisée ou dès lors que le verrou électronique déverrouille l'accès à la cabine 1.

Selon un mode de réalisation, l'interface électronique interne 3 comporte une mémoire, un calculateur et une interface de commande, par exemple un écran tactile ou un clavier permettant de générer un contenu interactif.

Selon différents exemples de réalisation, le contenu multimédia diffusé peut être :
▪ un programme interactif permettant de diffuser des informations et d'en collecter tel qu'un accord nécessitant une signature ou un formulaire comportant des choix relatifs à un utilisateur comme par exemple un lieu géographique, un besoin spécifique ;
▪ une formation interactive comportant des informations, des questionnaires et quizz ;
▪ une vidéo de présentation ;
▪ une visioconférence permettant d'établir un lien vidéo avec un opérateur distant ;
▪ etc.

### Casiers

La cabine 1 est pourvue d'un ensemble 5 de casiers 50, 51, ..., etc., comportant chacun individuellement un cadenas électronique pilotable à distance. Dans la suite de la description on nommera le casier 50, un casier sélectionné pour retirer un équipement par le premier utilisateur Ut₁.

Chaque cadenas électronique peut comprendre par exemple une interface de communication sans fil de manière à établir un lien avec une interface de communication de l'interface électronique interne 3. Ainsi, une commande à distance Cmd₂ permet d'activer le verrouillage ou le déverrouillage d'un casier donné 50. Chaque cadenas électronique comprend par exemple avantageusement un loquet mécanique amovible dont la position peut être modifiée à partir d'une consigne numérique. Chaque cadenas électronique peut être alimenté par une source d'alimentation commune à la cabine 1 ou par une source d'alimentation dédiée.

Selon un autre mode de réalisation, les cadenas électroniques sont associés à des interfaces numériques permettant d'activer le verrouillage ou le déverrouillage d'un casier 50 par un code. Selon ce dernier mode de réalisation, le code peut être envoyé sur l'afficheur de l'interface électronique interne 3 suite à l'authentification de l'utilisateur Ut₁ ou à une requête de sa part qui a été validée par une commande à distance.

De manière alternative, le code de déverrouillage peut être communiqué à partir d'un signal sonore ou une image générée à distance vers l'interface électronique interne 3.

Dans la suite de la description, le déverrouillage/verrouillage est réalisé à partir d'une commande numérique activant le cadenas électronique via une liaison sans fil.

Selon un mode de réalisation, un équipement de type routeur ou commutateur comportant un adressage de chaque cadenas électronique permet d'adresser chaque cadenas électronique et/ou chaque liaison réseau accessible dans chaque casier. Une commande de déverrouillage peut donc être adressée à distance transitant par le commutateur SW₁ afin d'être routée vers le cadenas déterminé pour activer un déverrouillage. Dans ce mode de réalisation, la commande de déverrouillage est reçue par l'intermédiaire du commutateur SW₁ sans nécessairement être acheminée vers l'interface électronique interne 3.

Selon un mode de réalisation, les casiers 5 comportent un volume adéquat permettant de stocker, par exemple, un PC portable. Chaque casier peut être en bois, en aluminium, en plastique ou en métal renforcé. Avantageusement, un son peut être émis à son ouverture pour informer l'utilisateur que le casier est ouvert.

Selon un mode de réalisation, chaque casier 50 comporte une alimentation électrique permettant de charger au moins un équipement électronique stocké dans ledit casier 50. Selon un mode de réalisation, chaque casier comporte un adaptateur multiple permettant de délivrer différentes connectiques pour s'interfacer avec différents types d'équipements électroniques.

Selon un mode de réalisation, chaque casier 50 est équipé d'une prise réseau permettant d'allumer et/ou de configurer l'équipement électronique 90x. Chaque équipement électronique 90x peut comporter un composant permettant de recevoir des messages du protocoles Wake-on-Lan. A titre d'exemple, chaque casier comporte une connectique Ethernet permettant de connecter chaque équipement électronique 9 au premier commutateur SW₁ agencé dans la cabine 1. Selon un autre mode de réalisation, la connectique est une connectique permettant d'établir une liaison radio en champ proche.

### Liens réseaux, commutateurs

Selon un mode de réalisation, la cabine 1 comporte au moins un premier lien réseau L₁. Selon un premier mode de réalisation, ce premier lien réseau L₁ est un lien physique tel qu'un lien Ethernet. Selon un autre exemple, le lien réseau L₁ peut être un lien sans fil par exemple utilisant le WIFI ou 3/4G et permettant d'établir une liaison distante avec un commutateur ou un routeur distant.

La cabine 1 comporte un premier commutateur SW₁ permettant :
▪ d'une part, d'établir une liaison de données avec un équipement réseau distant, tel qu'un serveur, un routeur, un switch, et définissant le premier lien réseau L₁ et ;
▪ d'autre part, d'établir une pluralité de liaisons de données avec un ensemble d'équipements électroniques 90x connectés aux interfaces réseaux de chaque casier 50, 51, etc.

Chaque équipement électronique 90x contenu dans chaque casier 50 peut donc être configurable à distance. A titre d'exemple, c'est par ce réseau de données que peuvent être préconfigurés ou configurés les équipements électroniques 90x qui sont dans les casiers. Différents serveurs peuvent être utilisés afin de configurer par exemple les applications, la messagerie, les droits utilisateurs, le système d'exploitation. Le protocole Wake-on-Lan peut être mis en oeuvre à cet effet. Selon un exemple de réalisation, les équipements électroniques sont des ordinateurs portables. L'ensemble de casiers est segmenté en différents sous-groupes correspondant à des métiers différents : ingénieur, RH, comptable, informaticien, juridique. Chaque ordinateur est donc préconfiguré en fonction des applications nécessaires relatives au métier. Une seconde configuration peut dépendre d'un niveau hiérarchique ou d'un type de contrat, par exemple une convention de stage ou un type contrat de travail, etc., la configuration peut comprendre également la prise en compte d'une date d'arrivée ou de départ.

Selon un mode de réalisation, la cabine 1 est pourvue d'un second lien réseau L2 permettant d'établir une liaison réseau entre un équipement réseau distant, tel qu'un serveur, un routeur, etc. et un second commutateur SW₂ agencé dans la cabine 1. Le second commutateur SW₂ est préférentiellement connecté avec l'interface électronique interne 3 et le moyen d'accès externe 7. La connexion peut être réalisée par une liaison filaire ou une liaison sans fil. Selon différentes variantes de réalisation, le second commutateur SW₂ est connecté à l'imprimante à badge, au capteur optique, aux différentes caméras présentes dans la cabine 1 et éventuellement à un équipement électronique branché à une connectique disponible sur la table 4.

Différentes configurations réseaux sont envisageables afin de connecter les différents matériels de communication de la cabine 1. Les matériels peuvent être soit directement connectés au second commutateur SW₂, soit connectés au commutateur SW₂ par l'intermédiaire d'un tiers équipement tel que l'interface électronique interne 3.

Le premier commutateur SW₁ peut être avantageusement disposé à l'arrière de la cabine 1 afin de limiter les liens physiques 20 traversant la cabine 1. Le premier commutateur SW₁ est ainsi situé à proximité des équipements électroniques 90x contenus dans les casiers 5 qu'il est destiné à raccorder. La figure 4 illustre les différents liens physiques entre le commutateur SW1 et les différents équipements électroniques 901,902, ..., 925.

Le second commutateur SW₂ est avantageusement disposé à l'avant de la cabine 1 comme l'illustre la figure 3 afin d'être au plus proche des équipements suivants : interface électronique interne 3, moyens d'accès externe 7, un lien Ethernet disponible sur la table 4 et éventuellement le capteur optique 8 et l'imprimante à badge. La figure 5 illustre les différents liens physiques entre le commutateur SW₂ et les différents matériels de la cabine 1 à savoir par exemple les matériels 3, 5, 7 et 8.

Selon un cas d'usage représenté à la figure 3, le premier commutateur SW₁ est accordé à un premier réseau d'échange de données NET1 et le second commutateur SW₂ est raccordé à un second réseau d'échange de donnée NET2. Dans cet exemple, le réseau NET1 est un réseau privé d'entreprise qui assure la maitrise, par exemple, de la configuration de chaque équipement électronique 90x. A tire d'exemple un serveur S1 est représenté, tel qu'un serveur d'applications ou de messagerie ou de gestion de droits utilisateurs. Une pluralité de serveurs peut être raccordé à ce réseau privé NET1. Le second réseau NET2 peut être par exemple le réseau internet assurant par exemple certaines fonctions qui peuvent être assurées en dehors du réseau privé de l'entreprise tel qu'un serveur de données diffusant du contenu de formation à destination d'un employé ou l'établissement d'une visioconférence avec un opérateur distant.

Un avantage d'une telle configuration comportant deux accès L₁, L₂ à deux différents réseaux NET1, NET2 est de dissocier :
▪ les fonctions de maintenance et de paramétrage des équipements électroniques avec ;
▪ les fonctions d'assistance et d'accueil d'un utilisateur Ut₁.

### Capteur optique

Selon un mode de réalisation, la cabine 1 comporte un capteur optique 8, également appelé communément lecteur optique, permettant de lire au moins un identifiant inscrit sur un marquage unique agencé sur un équipement électronique 9. Le marquage peut être un code barre, un code 2D tel qu'un QR code ou un Flashcode. L'inscription peut être noir et blanc ou en couleur. Selon un autre exemple de réalisation, le marquage est dans le domaine des fréquences infrarouges.

Lors du retrait d'un équipement électronique 9 contenu dans un casier 50 par un utilisateur Ut₁ ayant eu les droits d'accès à l'équipement électronique 9, ce dernier peut avantageusement disposer l'équipement électronique 9 sur la table 4 par exemple pour terminer un paramétrage de l'équipement 9. Selon un mode de réalisation ce dernier est invité à valider la prise du matériel. Le marquage est positionné de sorte à être lu par le capteur optique 8. L'identifiant est décodé et transmis à un serveur distant afin de permettre une gestion d'un parc de matériels.

Selon une alternative de réalisation, le capteur optique 8 est une caméra agencée dans la cabine 1. Dans ce cas, la caméra capture une image comportant le marquage, un logiciel d'analyse d'images décode l'inscription du marquage à partir d'un calculateur. L'identifiant est lu et transmis à un serveur distant. Selon une variante, l'image capturée par la caméra est envoyée à un serveur distant et le décodage de l'image est réalisé à partir d'un serveur distant.

Selon un mode de réalisation, le capteur optique 8 est connecté à l'interface électronique interne 3 de sorte à communiquer les informations collectées, telles que les informations comportant un identifiant. Il peut être par exemple connecté en USB. Selon un exemple de réalisation, les données peuvent comporter un identifiant, une configuration matérielle de l'équipement 9 ou encore un type de modèle, etc.

Selon un autre mode de réalisation, le capteur optique 8 est directement connecté au second commutateur SW₂. Ce dernier transfère les données collectées à une unité distante accessible depuis le réseau de données NET2.

Un avantage d'un tel lecteur intégré dans la cabine 1 est de permettre une gestion de parc du matériel, par exemple d'une entreprise, de manière instantanée et automatique.

Selon un mode de réalisation le dispositif 3 interactif permet de recueillir la signature de l'utilisateur UT₁ sur un document interactif type « PV de recette » valant acceptation de la livraison.

### Caméras

Selon un mode de réalisation, la cabine 1 comprend une première caméra fixée sur la surface intérieure frontale 101 permettant de filmer l'utilisateur de face. Avantageusement, cette caméra permet d'établir une visioconférence entre un opérateur distant et l'utilisateur Ut₁. Ainsi, ce dernier peut être plus facilement accompagné lors d'une assistance à une résolution d'un problème technique, d'une assistance à une session de formation, une assistance pour prendre connaissance d'informations relatives à son arrivée dans une entreprise par exemple.

Selon un mode de réalisation, la cabine 1 comprend une seconde caméra fixée au plafond permettant de filmer les actions réalisées par le l'utilisateur Ut₁. Avantageusement, cette caméra permet d'établir un contrôle à distance des bonnes actions menées par l'utilisateur et permet à un opérateur distant d'assister les actions à mener par exemple pour corriger un problème de configuration du matériel ou pour « lire » un document « papier ».

Selon un mode de réalisation, au moins une caméra est pilotable à distance. L'orientation et le zoom peuvent être pilotés à distance afin d'assister un utilisateur par exemple dans une configuration de l'équipement électronique 9.

### Connectique avant

Selon un mode de réalisation, la face avant 101 de la cabine 1 et/ou la table 4 est pourvue d'un ensemble de connecteurs permettant de raccorder un équipement électronique 9 à un ensemble d'appareils tels que le commutateur SW₂, l'interface électronique interne 3, etc. A titre d'exemple une connectique Ethernet RJ45 permet de connecter un ordinateur 9 au second commutateur SW₂ afin qu'un opérateur distant puisse par exemple :
- prendre le contrôle de l'ordinateur afin de terminer une configuration matérielle ou un paramétrage utilisateur ;
- télécharger au moins une application à distance afin de personnaliser l'ordinateur à un besoin utilisateur ;
- etc.

### Imprimante à badge

Selon un mode de réalisation, la cabine 1 comporte une imprimante à badge qui est soit connectée directement au commutateur SW₂ soit connectée à l'interface électronique interne 3.

Un intérêt est de permettre l'impression d'un badge d'un nouvel utilisateur Ut₁ directement surplace. Le badge peut ainsi comporter l'inscription de son identifiant pour accéder à certains espaces sécurisés et sa photo qui est imprimée sur une des faces du badge.

### Procédé

Selon un autre aspect, l'invention concerne un procédé de remise d'un équipement électronique Eq₁ à un utilisateur Ut₁. Selon un mode de réalisation, le procédé peut comprendre une étape préalable de restitution d'un précédent équipement Eq₂ par l'utilisateur Ut₁ avant d'en reprendre un nouveau.

La figure 6 illustre les principales étapes d'un mode de réalisation du procédé de l'invention.

Une première étape d'authentification AUTH_IDu permet d'authentifier à l'extérieur de la cabine 1 un utilisateur Ut₁. L'authentification est réalisée à partir du moyen d'accès externe 7 en façade de la cabine qui comporte au moins une interface, un calculateur. L'authentification consiste à échanger au moins un message avec un serveur distant afin de procéder à l'identification d'un utilisateur Ut₁.

L'authentification peut correspondre à l'identification d'un accompagnateur, par exemple d'un nouvel utilisateur qui créera ensuite son profil à l'intérieur de la cabine.

L'authentification AUTH_IDu peut comprendre :
- la transmission d'un identifiant, par exemple d'un mémorisé dans un badge ;
- la transmission d'un nom, par exemple, en utilisant un menu comportant une liste de personnes ; éventuellement la validation de l'authentification peut être effectuée par le partage d'un secret tel qu'un mot de passe ou par l'activation d'une capture d'image à partir d'une caméra du moyen d'accès 7;
- la transmission d'une requête d'ouverture qui est corroborée avec une information enregistrée correspondant à un rendez-vous planifié d'un nouvel utilisateur. Dans ce dernier cas l'authentification est une validation d'un rendez-vous préalablement pris avec par exemple un tiers ou une plateforme de prise de rendez-vous. Dans ce cas, l'identité de l'utilisateur a déjà été transmise.

Une seconde étape OUV_ACCES correspond à l'ouverture de l'accès de la cabine, à partir d'une commande à distance généré par un serveur distant et permettant de déverrouiller un verrou électronique. Ce dernier verrou peut être par exemple raccordé à un commutateur SW₂ ou au moyen d'accès externe 7 soit au moyen d'une interface filaire ou au moyen d'une liaison sans fil.

Selon un mode de réalisation, l'authentification ou l'ouverture de l'accès peut automatiquement générer une requête visant à établir une connexion entre l'interface électronique interne 3 et un serveur distant. Cette étape est notée ACT_VIDEO.

Selon une alternative, l'étape ACT_VIDEO est activée par l'utilisateur Ut₁ par une commande établie à partir de l'interface électronique interne 3.

Selon un exemple de réalisation, un contenu multimédia est diffusé sur l'afficheur de l'interface électronique interne 3 pour présenter des informations à l'utilisateur Ut₁.

Le procédé comprend une étape de création ou de contrôle du profil utilisateur CNTRL_PROFIL et donc de l'attribution des droits qu'il possède ou qui lui seront attribués. Cette étape peut être simultanément réalisée lors de l'authentification AUTH_ID ou lorsque l'utilisateur est dans la cabine et qu'il est en mesure de fournir des éléments supplémentaires au moyen de l'interface électronique interne 3.

A titre d'exemple, l'utilisateur Ut₁ peut fournir une adresse, une qualification, un titre ou une fonction. Selon un mode de réalisation, il définit un profil utilisateur complet comportant un nom de service, un nom de supérieur hiérarchique, un lieu géographique, une habilitation ou toute autre information apportant une précision pour établir ses droits utilisateurs.

Selon un mode de réalisation, l'utilisateur est invité à prendre connaissance d'une information nécessitant une validation de sa part. La validation peut être par exemple une signature électronique sur l'interface électronique interne 3.

Lorsque la création ou le contrôle des droits utilisateurs ou du profil utilisateur est réalisé(e), une étape REQ_EQ visant à définir une requête d'un équipement électronique est générée. Selon un mode de réalisation, la requête d'un équipement est automatiquement générée sans action utilisateur Ut₁, la requête d'un équipement peut être également la transformation d'un élément du profil utilisateur au serveur distant. La requête peut être intégré dans un flux vidéo ou un message texte.

Le procédé comporte une étape OUV_CASE_EQᵢ de génération du seconde commande de déverrouillage d'un casier spécifique 50. Le casier spécifique 50 est déterminé en fonction des droits utilisateur alloués à l'utilisateur Ut₁. Eventuellement, un signal sonore peut être émis visant à avertir l'utilisateur qu'un casier 50 est ouvert pour que ce dernier récupère le matériel fourni.

Le procédé comporte une étape d'identification IDEN_EQᵢ de l'équipement délivré par une lecture d'une information inscrite sur l'équipement électronique. L'information comprend, par exemple, un identifiant Id_Eqᵢ.

Lorsque l'information est lue et décodée par le capteur optique 8, l'information est transmise à un serveur distant.

Le procédé comporte une étape d'association NEW_ASSO entre l'identifiant Id_Ut₁ de l'utilisateur Ut₁ et l'identifiant de l'équipement Id_Eqᵢ. L'étape d'association comporte l'enregistrement d'un lien entre les deux identifiants par exemple au moyen d'une base de données.

Une nouvelle association peut également être créée lorsqu'une précédente association était déjà enregistrée dans la mémoire.

Selon un mode de réalisation, le procédé de l'invention comprend une étape visant à terminer la configuration d'un équipement électronique. Cette étape comprend la connexion de l'équipement à un connecteur permettant d'accéder au réseau de données NET2. L'étape de configuration comprend éventuellement une définition ou la création d'un nouveau compte utilisateur avec la création d'un mot de passe. Selon un mode de réalisation, la caméra est configurée pour prendre une photo de l'utilisateur Ut₁ qui peut être utilisée lors de l'impression du badge qui sera délivrée à l'utilisateur Ut₁. Cette étape peut également comprendre une étape de configuration du serveur de messagerie ou d'une configuration logicielle de la messagerie telle qu'une signature de mail.

Cette étape peut comprendre la copie depuis un serveur distant d'un ensemble de documents d'information dans une mémoire de l'équipement électronique 9 tel qu'un plan du site, des horaires de cantine, une procédure prédéfinie, etc.

Lorsque la configuration de l'équipement de l'utilisateur Ut₁, ce dernier peut activer un nouveau programme à partir de l'interface électronique interne 3 ou terminer la session et sortir de la cabine 1 en déconnectant son équipement électronique 9.

Selon un mode de réalisation, le procédé comporte des étapes préalables dans le cas où un utilisateur Ut₁ restitue un équipement électronique 9 qu'il a introduit dans la cabine 1. Dans ce cas de figure, l'utilisateur peut activer une demande de restitution REST_Eq soit par une requête vocale, vidéo, texte ou une commande tactile de l'interface électronique interne 3.

A cette fin, le capteur optique 8 collecte une image d'une information, telle qu'un identifiant, inscrite sur un marquage de l'équipement électronique.

Lorsque l'identifiant est transmis et qu'il est enregistré dans une base de données distante, une commande d'ouverture d'un casier vide 50 peut être générée. A cette fin, une requête permettant de lire dans une base de données une liste de casiers 50 et leur état {vide ; occupé} peut être générée.

Le choix final du casier vide 50 à déverrouiller est déterminé automatiquement ou par une validation effectuée par un opérateur distant.

Le procédé permet de modifier une base de données dans laquelle sont associées des identifiants de casier et la présence ou non d'un matériel et le cas échéant l'identifiant de l'équipement électronique présent dans le casier.

Ainsi, un casier sécurisé est ouvert, OUV_CASE_VID, à partir d'une commande distante afin que l'utilisateur restitue le matériel.

Une association entre l'utilisateur Ut₁ et l'équipement électronique restitué est alors modifiée MODIF_ASSO dans la base de données stockant ces informations.

L'utilisateur peut ensuite soit récupérer un nouvel équipement, voir étape NEW_REQ, selon un mode de réalisation décrit précédemment soit terminer le protocole de restitution du matériel et sortir de la cabine 1.

### Log

Selon un mode de réalisation, chaque contenu diffusé à l'utilisateur Ut₁ à partir de l'interface électronique interne 3 est logué dans une base de données distante et les données de log sont enregistrées dans une mémoire associée à l'utilisateur Ut₁. Ainsi, cette fonction permet de connaitre l'ensemble des contenus diffusés à l'utilisateur Ut₁, l'ensemble des formations et des documents validés par ce dernier. Un intérêt est, par exemple, de ne pas rediffuser un contenu déjà visionné par l'utilisateur Ut₁ ou de référencer les formations qu'il a suivi. Un autre intérêt est de permettre d'informer l'employeur des contenues visionnés, par exemple, dans le cadre de formations réglementaires ou de sécurités.

## Revendications

1. Cabine interactive (1), **caractérisée en ce qu'**elle comporte :
▪ un moyen d'accès électronique externe (7) agencé à l'extérieur de la cabine interactive (1) pour générer une requête de déverrouillage d'un accès à l'intérieur de la cabine (1) ;
▪ un accès sécurisé (11) piloté par un verrou électronique déverrouillant l'accès à la cabine (1) partir d'une première commande numérique (Cmd₁);
▪ Un ensemble (5) de casiers sécurisés (501, 502, ..., 525) agencé à l'intérieur de la cabine interactive (1) verrouillable/dé-verrouillable à partir d'une seconde commande numérique distante (Cmd₂) ;
▪ Un premier lien réseau (L₁) pour l'établissement d'au moins une liaison de données à distance avec le moyen d'accès électronique externe (7) ;
▪ Un second lien réseau (L₂) pour l'établissement d'un lien à distance avec un premier commutateur (SW₁) agencé dans la cabine interactive (1), ledit premier commutateur (SW₁) étant connecté à une pluralité d'équipements électroniques (90x), chaque équipement électronique (90x) étant agencé dans un casier de l'ensemble de casiers ;
▪ Un capteur optique (8) pour lire et transmettre à distance à partir du premier lien réseau (L₁) un identifiant codé sur un marquage d'un équipement électronique.

2. Cabine interactive (1) selon l'une quelconque des revendications précédentes, **caractérisée en ce que** le moyen d'accès électronique externe (7) comporte une interface optique et/ou une interface tactile permettant de transmettre une requête de déverrouillage de la cabine (1).

3. Cabine interactive (1) selon l'une quelconque des revendications précédentes, **caractérisée en ce qu'**au moins un casier (50) comporte :
▪ une première connectique réseau (20) assurant la transmission de messages du protocole Wake-on-LAN pour démarrer les équipements électroniques (90x) et configurer ces derniers à distance et ;
▪ une seconde connectique d'alimentation pour connecter un équipement électronique (90x) contenu dans le casier (50) à une source d'alimentation.

4. Cabine interactive (1) selon l'une quelconque des revendications précédentes, **caractérisée en ce que** la pluralité de casiers (5) est agencée sur la face arrière intérieure (102) de la cabine (1).

5. Cabine interactive (1) selon l'une quelconque des revendications précédentes, **caractérisée en ce qu'**elle comporte une interface électronique interne (3) munie d'un afficheur agencé à l'intérieur de la cabine interactive (1), la cabine interactive (1) comportant en outre un second commutateur (SW₂) connecté au moyen d'accès électronique externe (7) et à l'interface électronique interne (3).

6. Cabine interactive (1) selon l'une quelconque des revendications précédentes, **caractérisée en ce que** le capteur optique (8) est raccordé à un réseau de données (NET2) par l'intermédiaire :
▪ de l'interface électronique interne (3), ou ;
▪ du second commutateur (SW₂).

7. Cabine interactive (1) selon l'une quelconque des revendications précédentes, **caractérisée en ce qu'**elle comporte :
▪ Une première caméra fixée sur la façade avant intérieure (101) de la cabine interactive (1) afin d'établir une connexion multimédia entre un opérateur distant et un utilisateur (Ut₁) à l'intérieur de la cabine interactive (1) et/ ou ;
▪ Une seconde caméra fixée au plafond de la cabine interactive (1) afin d'établir un contrôle visuel à distance des opérations réalisées par l'utilisateur.

8. Cabine interactive (1) selon l'une quelconque des revendications précédentes, **caractérisée en ce qu'**elle comporte une imprimante à badge pilotable à distance, l'imprimante imprimant, à réception d'une commande numérique, une carte imprimée comportant une mémoire configurée lors de l'impression pour stocker un identifiant utilisateur prédéfini.

9. Cabine interactive (1) selon la revendication 7, **caractérisée en ce que** les badges configurables sont des badges :
▪ à technologie sans fil, tel qu'une technologie supportant le protocole NFC ou RFID, ou ;
▪ à technologie de contact, tel qu'un badge comportant une piste magnétique ou une puce électronique à contact.

10. Procédé de déverrouillage d'un accès à un équipement électronique comportant les étapes suivantes :
▪ génération d'une requête de déverrouillage au moyen d'une interface externe fixée à une cabine sécurisée (1) ;
▪ déverrouillage d'un accès (11) à l'intérieur de la cabine interactive (1) par la génération d'une première commande (Cmd1) comportant une information apte à déverrouiller l'accès (11) ;
▪ contrôle des droits utilisateurs du premier utilisateur et sélection d'un casier (50) comportant un équipement électronique attribuable à un profil prédéfini dans une base de données ;
▪ ouverture du casier sélectionné à partir d'une seconde commande à distance (Cmd2) ;
▪ identification d'un premier équipement électronique (Eq₁) contenu dans le casier ouvert, ledit premier équipement électronique (Eq₁) comportant un marquage unique, l'identification étant réalisée à partir d'une opération de lecture optique du marquage unique ;
▪ Une association à distance entre l'identifiant du premier utilisateur (Id_Ut₁) et l'identifiant de l'équipement électronique (Id_Eq₁) afin d'enregistrer dans une mémoire distante ladite association.

11. Procédé selon la revendication 10, **caractérisé en ce qu'**il comporte une activation d'une liaison bidirectionnelle permettant d'établir un flux média de type vidéo afin :
• de générer une image d'un opérateur distant sur un afficheur (3) agencé sur la partie frontale intérieure (101) de la cabine interactive (1) ;
• de transmettre une image du premier utilisateur (Ut₁) à un opérateur distant à partir d'une caméra agencée dans la cabine (1).

12. Procédé selon la revendication 11, **caractérisé en ce que** l'activation de la liaison bidirectionnelle est réalisée automatiquement dès l'authentification du premier utilisateur (Ut₁) effectuée ou dès l'ouverture de l'accès (11) de la cabine interactive (1).

13. Procédé selon l'une quelconque des revendications 10 à 12, **caractérisé en ce que** le procédé comprend une étape de sélection d'une opération de restitution d'un second équipement électronique (Eq₂), ledit procédé comportant :
▪ une identification dudit second équipement (Eq₂) par la lecture d'un marquage unique agencé sur l'équipement à partir d'un capteur optique (8),
▪ une transmission d'un identifiant du second équipement (Id_Eq₂) à un serveur distant à partir d'au moins une interface réseau présente dans la cabine interactive (1) ;
▪ une validation dudit identifiant (Id_Eq₂) et une modification de l'état d'association entre l'identifiant du premier utilisateur (Id_Ut₁) et d'un identifiant du second équipement restitué (Id_Eq₂) ;
▪ une génération d'une commande d'ouverture (Cmd₃) d'un casier (51) vide pour la restitution du second équipement (Eq₂) à restituer ;
▪ Une génération d'une requête d'un nouvel équipement (Eq₁) à partir d'une requête générée au moyen de l'interface électronique interne (3).
